# FASCICULE DE BREVET EUROPEEN

(11) **EP 2 052 654 B1**
(45) Date de publication et mention de la délivrance du brevet: **28.11.2012**
(21) Numéro de dépôt: 08019491.3
(22) Date de dépôt: 01.02.2007
(51) Int. Cl.: A47J 37/12

(54) **Appareil de cuisson avec moyen de remuage et procédé afferent**
Kochgerät mit Mittel zum Umrühren und entsprechendes Verfahren
Cookware with stirring system and associated method

(30) Priorité: 01.02.2006 FR 0600959
(43) Date de publication de la demande: 29.04.2009
(62) Demande divisionnaire de: 07730903.7
(73) Titulaire: SEB S.A., 69132 Ecully Cedex (FR)
(72) Inventeur: Goderiaux, Arnaud, 70100 Montureux et Prantigny (FR); Bizard, Jean-Claude, 21121 Fontaine les Dijon (FR)
(74) Mandataire: Martin, Didier Roland Valéry

(56) Documents cités:
- FR-A- 2 356 397
- FR-A- 2 871 042
- US-B1- 6 289 793

## Description

### DOMAINE TECHNIQUE

La présente invention se rapporte au domaine technique général des appareils de chauffe ou de cuisson d'aliments, notamment à usage domestique, et en particulier des appareils de cuisson d'aliments en présence de matière grasse.

La présente invention concerne un appareil de cuisson d'aliments comprenant d'une part un récipient destiné à contenir les aliments et d'autre part une pale disposée au sein du récipient, lesdits récipient et pale étant conçus pour être animés d'un mouvement relatif de rotation afin de remuer les aliments dans le récipient.

### TECHNIQUE ANTERIEURE

La friture d'aliments par immersion complète dans un bain d'huile est bien connue.

Une telle friture peut par exemple être réalisée à l'aide d'une friteuse électrique domestique comprenant d'une part une cuve destinée à être remplie d'huile ou de matière grasse, et d'autre part des résistances chauffantes permettant de chauffer le contenu de la cuve.

Les friteuses électriques connues permettent ainsi de réaliser un bain d'huile ou de matière grasse fondue à haute température dans lequel on plonge les aliments à frire, par exemple par l'intermédiaire d'un panier de cuisson.

Ce mode de friture classique par immersion dans un bain d'huile chaude, s'il donne généralement satisfaction, présente toutefois de nombreux inconvénients.

En premier lieu, ces friteuses classiques mettent en oeuvre, pour réaliser le bain de cuisson, une quantité importante d'huile. Cela implique des difficultés de manipulation pour l'utilisateur lorsqu'il remplit sa friteuse, lorsqu'il la déplace et surtout lorsqu'il la vide.

Ce bain de cuisson à haute température est également source de risque de brûlures, que ce soit par projections hors de la cuve de l'appareil ou par suite d'une maladresse de l'utilisateur (renversement de l'appareil). Ce risque de brûlures ou d'accidents est accru par le fait qu'une quantité aussi importante d'huile nécessite, avant d'introduire les aliments dans la cuve pour les frire, une phase de préchauffage relativement longue. Cela peut conduire l'utilisateur à oublier son bain d'huile en phase de préchauffe, avec toutes les conséquences néfastes que cette absence de surveillance pourrait engendrer.

Par ailleurs, ces friteuses connues s'avèrent d'un usage relativement coûteux, puisqu'elles nécessitent l'achat régulier d'une grande quantité d'huile (au minimum 1,5 à 2 L d'huile sont en effet généralement nécessaires pour frire 1 Kg de morceaux de pommes de terre fraîches). L'utilisateur est donc naturellement conduit à économiser l'huile en réutilisant plusieurs fois le même bain de cuisson, ce qui est peu satisfaisant du point de vue de l'hygiène et du goût. De plus, l'utilisateur peut réutiliser un bain de cuisson, alors que celui-ci s'est dégradé, ce qui peut être néfaste pour la santé. Lorsque l'utilisateur se débarrasse de l'huile usagée, ceci peut avoir des conséquences dommageables pour l'environnement.

Enfin, le chauffage à haute température d'une telle quantité d'huile provoque d'une part des dégagements d'odeurs qui peuvent s'avérer particulièrement désagréables, et d'autre part une polymérisation de l'huile qui rend le nettoyage de l'appareil difficile et contraignant.

Afin de remédier à ces inconvénients, il pourrait être envisageable de ne se contenter que d'un simple rissolage des aliments, dans une faible quantité d'huile qui n'autorise pas l'immersion complète des aliments. Dans un tel cas de figure, il est toutefois nécessaire d'assurer un remuage continu des aliments et de la matière grasse afin d'enduire de la manière la plus uniforme possible les aliments de matière grasse et de favoriser un chauffage homogène des aliments ainsi enduits, de manière à ce qu'ils présentent un aspect doré et croustillant sur toute leur enveloppe superficielle.

On connaît bien entendu dans le domaine culinaire des systèmes de remuage mettant en oeuvre des pales d'agitation comme dans US 6 289 793. De tels systèmes s'avèrent cependant inadaptés au brassage d'aliments se présentant sous la forme de morceaux solides ou semi-solides relativement fragiles, et dont la consistance varie au fur et à mesure de la cuisson. Les dispositifs de remuage connus ne sont ainsi tout simplement pas capables d'assurer un brassage permettant d'assurer d'une part une enduction uniforme des aliments par la matière grasse (lorsque la présence de cette dernière est requise) et d'autre part un chauffage homogène des aliments, et ce sans détériorer ces derniers.

On connaît par ailleurs du document FR-2 356 397 un appareil électroménager comprenant un récipient de cuisson et un organe de brassage, ledit récipient comportant deux poignées diamétralement opposées ainsi qu'une saillie dirigée vers l'intérieur du récipient pour rentrer en contact avec les aliments contenus dans le récipient.

### EXPOSE DE L'INVENTION

Les objets assignés à l'invention visent en conséquence à porter remède aux différents inconvénients énumérés précédemment et à proposer un appareil de cuisson d'aliments qui permet de réaliser une cuisson homogène et uniforme des aliments par un remuage particulièrement efficace de ces derniers en cours de cuisson.

Un autre objet de l'invention vise à proposer un nouvel appareil de cuisson de construction particulièrement simple.

Un autre objet de l'invention vise à proposer un nouvel appareil de cuisson qui permet de réaliser un mouvement de brassage des aliments particulièrement approfondi et homogène.

Un autre objet de l'invention vise à proposer un nouvel appareil de cuisson qui permet un remuage efficace des aliments indépendamment de la quantité de ces derniers.

Un autre objet de l'invention vise à proposer un nouvel appareil de cuisson de construction particulièrement compacte et peu onéreuse.

Un autre objet de l'invention vise à proposer un nouvel appareil de cuisson qui évite la formation d'un bloc d'aliments ne se déplaçant pas les uns relativement aux autres.

Un autre objet de l'invention vise à proposer un nouvel appareil de cuisson qui empêche que les aliments restent collés au récipient.

Un autre objet de l'invention vise à proposer un nouvel appareil de cuisson mettant en oeuvre une cinématique particulièrement simple.

Un autre objet de l'invention vise à proposer un nouvel appareil de cuisson qui permet la réalisation de frites sans la mise en oeuvre d'une immersion complète des aliments dans un bain d'huile.

Un autre objet de l'invention vise à proposer un nouveau procédé de cuisson d'aliments permettant une cuisson homogène et uniforme des aliments grâce à un remuage particulièrement efficace des aliments.

Un autre objet de l'invention vise à proposer un nouveau procédé de cuisson d'aliments permettant l'obtention de frites présentant des qualités organoleptiques proches ou équivalentes de celles de frites obtenues par immersion totale dans un bain d'huile, sans mettre en oeuvre une telle immersion et en n'utilisant qu'une petite quantité de matière grasse.

Les objets assignés à l'invention sont atteints à l'aide d'un appareil de cuisson d'aliments conforme à l'objet de la revendication 1.

### DESCRIPTIF SOMMAIRE DES DESSINS

D'autres objets et avantages de l'invention apparaîtront plus en détails à l'aide de la description qui suit, en référence aux dessins annexés donnés à titre d'exemples illustratifs et non limitatifs dans lesquels :
- La figure 1 illustre, selon une vue plongeante de face, l'intérieur d'un appareil de cuisson conforme à un premier mode de réalisation de l'invention.
- La figure 2 illustre, selon une vue éclatée, l'appareil illustré à la figure 1.
- La figure 3 illustre, selon une vue de dessus, l'appareil illustré aux figures 1 et 2.
- La figure 4 illustre, selon une vue en perspective, un gobelet doseur faisant partie de l'appareil illustré aux figures 1 à 3.
- La figure 5 illustre, selon une vue de dessous en perspective, le couvercle de l'appareil illustré aux figures 1 à 3.
- La figure 6 illustre, selon une vue en perspective, la pale de l'appareil illustrée aux figures 1 à 3.
- La figure 7 illustre, selon une vue de côté en perspective, un organe de raclage destiné à être monté de façon amovible sur la pale illustrée à la figure 6.
- La figure 8 illustre, selon une vue en perspective, le récipient de l'appareil illustré aux figures 1 à 3.
- La figure 9 illustre, selon une vue en perspective, la pale et l'organe de raclage illustrés aux figures 6 et 7, l'organe de raclage étant monté sur la pale.
- La figure 10 illustre, selon une vue en perspective plongeante, l'assemblage pale/organe de raclage de la figure 9.
- La figure 11 illustre, selon une vue de dessous en perspective, l'assemblage pale/organe de raclage des figures 9 et 10.
- La figure 12 illustre, selon une vue en perspective, l'organe de raclage illustré aux figures 7, 9, 10 et 11, vu du côté opposé à celui de la vue de la figure 7.
- La figure 13 illustre, selon une vue plongeante, le récipient, la pale et l'organe de raclage de l'appareil illustré aux figures précédentes.
- La figure 14 illustre, selon une vue plongeante en perspective, le récipient et la pale d'un appareil de cuisson conforme à un second mode de réalisation de l'invention.
- La figure 15 illustre selon une vue en perspective, le récipient d'un appareil de cuisson conforme à l'invention, équipé d'un obstacle destiné à entrer en contact avec les aliments pour empêcher l'accumulation, contre la pale, d'un bloc d'aliments qui ne se déplacent pas les uns relativement aux autres.
- La figure 16 est une vue agrandie de détail de la figure 15.
- La figure 17 est une vue en élévation de la pale illustrée à la figure 6.
- La figure 18 est une vue de dessus de la pale de la figure 17.

### MEILLEURE MANIERE DE REALISER L'INVENTION

L'appareil 1 de cuisson d'aliments illustré aux figures est de préférence un appareil domestique, c'est-à-dire qu'il est spécifiquement conçu et dimensionné pour un usage domestique. L'invention n'est cependant pas limitée au cadre familial, et concerne également les appareils semi-professionnels ou professionnels, voire même les installations industrielles telles que celles utilisées dans le domaine agro-alimentaire.

L'appareil 1 illustré aux figures est préférentiellement destiné à assurer la cuisson d'éléments particulaires, se présentant sous la forme de morceaux solides ou semi-solides, et présentant de préférence un caractère sensiblement polyédrique, tels que des morceaux de pommes de terre (en vue d'obtenir des frites par exemple), ou tels que des morceaux de légumes coupés (pour réaliser une poêlée de légumes par exemple).

L'appareil 1 est préférentiellement destiné à assurer la cuisson des aliments en présence de matière grasse, mais la cuisson sans apport de matière grasse externe (autre que celle contenue dans les aliments eux-mêmes), voire même en l'absence de tout fluide de cuisson externe, fait partie intégrante du cadre de l'invention.

L'appareil 1 illustré aux figures est conçu tout particulièrement pour assurer soit la réalisation de frites à partir de morceaux de pommes de terre, soit la réalisation de poêlées de légumes à partir de morceaux de légumes coupés. Les morceaux de pommes de terre ou de légumes pourront avoir été coupés manuellement par l'utilisateur, ou avoir été achetés déjà préparés dans le commerce, à l'état frais ou surgelé. L'invention n'est cependant pas limitée spécifiquement à l'élaboration de pommes de terre frites ou de poêlées de légumes. La friture, le rissolage, le rôtissage ou de manière générale le réchauffage de tout autre type d'aliments (incluant par exemple les viandes, poissons, crustacés et fruits) fait partie du cadre de l'invention.

L'appareil 1 conforme à l'invention comprend un récipient 2 destiné à contenir les aliments (non représentés). Le récipient 2 forme ainsi un moyen de réception conçu pour accueillir en son sein les aliments à cuire. De préférence, le récipient 2 est également conçu pour accueillir et contenir un médium de cuisson, se présentant par exemple sous forme liquide ou semi-liquide, tel que de la matière grasse (huile, beurre ou graisse). A cette fin, le récipient 2 est préférentiellement non ajouré, c'est-à-dire qu'il présente un caractère sensiblement plein pour éviter toute fuite de matière grasse hors de son sein.

De façon préférentielle, tel que cela est illustré aux figures, le récipient 2 comprend un fond 2A, présentant de préférence une forme sensiblement discoïde d'axe de symétrie X-X'. A partir du fond 2A s'élève une paroi latérale 2B entre un bord inférieur relié au fond 2A et un bord supérieur libre 2C délimitant une ouverture supérieure permettant l'introduction des aliments dans le récipient 2.

Le récipient 2 présente donc préférentiellement une symétrie de révolution d'axe X-X'.

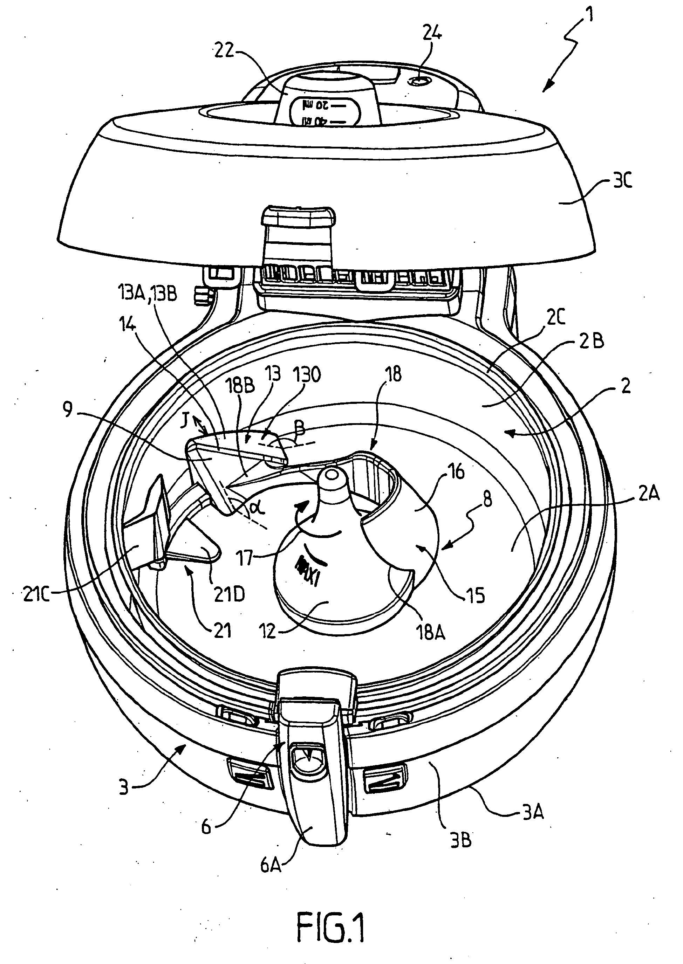

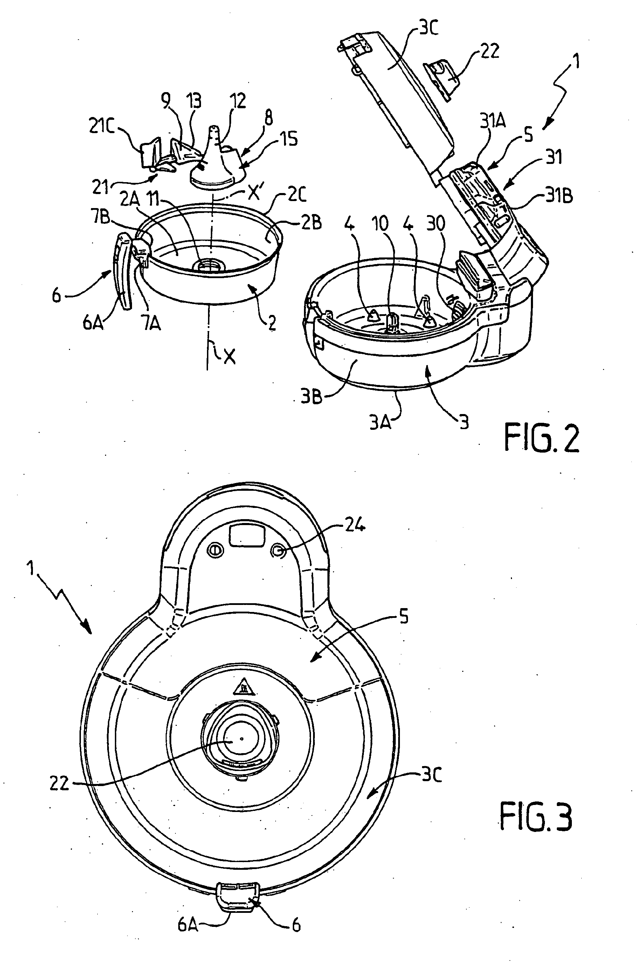

Avantageusement, l'appareil 1 comprend un corps principal 3 au sein duquel le récipient 2 est monté, de préférence de manière amovible. De façon préférentielle, tel que cela est illustré en particulier aux figures 1 et 2, le corps principal 3 comprend une embase 3A destinée à former le socle de l'appareil 1, et conformé à cet effet pour reposer de façon stable sur un plan ou un support.

L'embase 3A définit ainsi une face d'appui, destinée à venir en contact avec ledit plan ou support, et une face opposée de réception du récipient 2, comprenant par exemple des plots de support 4, faisant saillie à partir de la face interne de l'embase 3A, et sur lesquels le récipient 2 est destiné à reposer. A partir de l'embase 3A et à la périphérie de cette dernière s'élève une jupe latérale 3B, réalisée par exemple en un matériau métallique ou en un matériau plastique, et formant l'enveloppe externe de l'appareil 1. Avantageusement, le corps principal 3 est également muni d'un couvercle 3C monté mobile entre d'une part une position de fermeture (illustrée à la figure 3), dans laquelle le couvercle 3C forme avec l'embase 3A et la jupe 3B une enceinte sensiblement fermée autour des aliments à cuire, et d'autre part une position d'ouverture (illustrée aux figures 1 et 2), autorisant l'introduction des aliments à cuire au sein du corps principal 3, dans le récipient 2. En d'autres termes, lorsque le couvercle 3C est en position de fermeture, le corps principal 3 forme un boîtier clos, c'est-à-dire présentant un caractère sensiblement hermétique, autorisant ainsi une cuisson en atmosphère fermée. La fermeture sensiblement étanche du corps principal 3 peut être réalisée par exemple par l'intermédiaire de joints d'étanchéité à l'interface jupe 3B/couvercle 3C. Tel que cela est illustré aux figures, le couvercle 3C est avantageusement monté à pivotement relativement à la jupe 3B, par exemple par l'intermédiaire d'une charnière 5 éventuellement munie d'un ressort de torsion de façon que la position d'ouverture du couvercle 3C soit également une position de rappel stable. Avantageusement, le couvercle 3C est monté amovible relativement à la charnière 5, de façon à en faciliter le nettoyage.

Le chauffage des aliments contenus dans le récipient 2 peut être réalisé par tous moyens de chauffe connus internes (i.e. intégrés à l'appareil 1) ou externes (i.e. indépendants de l'appareil 1).

Avantageusement, l'appareil 1 comporte, monté sur le corps principal 3 et donc intégré à l'appareil 1, un moyen de chauffe principal conçu pour générer un flux d'air chaud orienté vers l'intérieur du récipient 2. Par *« moyen de chauffe principal* », on désigne un moyen de chauffe qui assure à lui seul au moins l'essentiel de l'apport thermique permettant la cuisson. De façon préférentielle, le moyen de chauffe principal est conçu et agencé pour assurer la totalité dudit apport thermique.

De manière avantageuse, le moyen de chauffe principal comprend un ventilateur générant un flux aéraulique en aspirant de l'air au sein du corps principal 3 par au moins une ouïe d'entrée 30 (visible sur la figure 2), ménagée de préférence latéralement relativement au récipient 2, et en refoulant cet air, préalablement chauffé, par un dispositif de canalisation 31, lequel débouche en direction et au-dessus des aliments présents dans le récipient 2. Avantageusement, le dispositif de canalisation. 31 comprend deux conduits 31A, 31 B s'étendant selon une forme de Y dans la charnière. De manière préférentielle, les conduits 31A, 31B coopèrent en emboîtement avec le couvercle 3C, ce dernier comportant à cet effet deux orifices 32A, 32B conjugués audits conduits 31A, 31 B. Le couvercle 3C est ainsi préférentiellement enfilé de manière amovible, par ses orifices 32A, 32B sur les conduits 31A, 31 B eux-même intégrés dans la charnière 5.

Afin de faciliter l'extraction et la remise en place du récipient 2 au sein du corps principal 3, l'appareil 1 comprend de préférence une poignée 6 conçue pour être solidarisée, à demeure ou de manière amovible, au récipient 2. Dans l'exemple de réalisation illustré aux figures, la poignée 6 comprend avantageusement d'une part une mâchoire 7 comportant deux mors 7A, 7B destinés à enserrer la paroi latérale 2B du récipient 2 pour solidariser la poignée 6 au récipient 2, et d'autre part un organe de préhension 6A.

La poignée 6 est avantageusement conçue pour passer d'une configuration de manipulation (non représentée), dans laquelle l'organe de préhension 6A s'étend sensiblement perpendiculairement à la paroi latérale 2, à une configuration de rangement, dans laquelle l'organe de préhension 6A s'étend le long de la paroi latérale 2B (cf. figure 2).

Tel que cela est illustré aux figures, l'appareil 1 comprend également une pale 8 disposée au sein du récipient 2, c'est-à-dire dans le volume interne destiné à accueillir les aliments à cuire, et qui est défini par le fond 2A et la paroi latérale 2B. Le récipient 2 et la pale 8 sont conçus pour être animés d'un mouvement relatif de rotation afin de remuer les aliments dans le récipient 2.

En d'autres termes, les configurations suivantes font pleinement partie du cadre de l'invention :
- le récipient 2 est immobile, tandis que la pale 8 tourne à l'intérieur du récipient 2, relativement à ce dernier ;
- la pale 8 est immobile, tandis que le récipient 2 tourne relativement à la pale 8 ;
- le récipient 2 et la pale 8 tournent tous les deux, mais à des vitesses de rotation différentes.

Sous l'effet de ce mouvement relatif de rotation, les aliments sont mis en mouvement au sein du récipient 2 et inter-agissent ainsi avec la pale 8, ce qui entraîne leur remuage au sein du récipient 2.

Dans les variantes illustrées aux figures, et qui correspondent à un mode préférentiel de réalisation de l'invention, le récipient 2 est monté immobile au sein du corps principal 3, tandis que la pale 8 est montée mobile en rotation relativement au corps principal 3 et au récipient 2.

En d'autres termes, dans ce mode préférentiel de réalisation, le récipient 2 est fixe tandis que la pale 8 tourne au sein du récipient 2. De façon préférentielle, afin de réaliser ce déplacement relatif du récipient 2 et de la pale 8, un moyen d'entraînement (non représenté), tel qu'un moteur électrique, est disposé au sein de l'embase 3A. Ce moyen d'entraînement entraîne en rotation un arbre 10 (visible sur la figure 2). Un orifice 11 est ménagé sensiblement au centre du fond 2A du récipient 2, afin de permettre le passage de l'arbre 10 à travers le fond 2A. La pale 8 comprend quant à elle avantageusement un moyeu 12 destiné à être encastré, de préférence de façon amovible, à l'arbre 10, de façon que l'arbre 10 puisse ainsi entraîner en rotation la pale 8 au sein du récipient 2, ce dernier restant immobile. Dans le mode de réalisation préférentiel illustré aux figures, le moyeu 12 est disposé de façon sensiblement coaxiale à l'axe de symétrie X-X' du récipient 2 et à l'arbre 10, de telle sorte que l'axe de rotation de la pale 8 est préférentiellement confondu avec l'axe de symétrie X-X' du récipient 2.

Selon l'invention, la pale 8 comprend un moyen de basculement 13 conformé pour assurer, sous l'effet du mouvement relatif de rotation, le basculement d'au moins une fraction des aliments selon une direction de basculement D qui présente, dans le plan du mouvement de rotation, majoritairement une composante radiale. Le plan du mouvement de rotation est le plan perpendiculaire à l'axe de rotation X-X' ; dans les modes de réalisation illustrés aux figures, il correspond au plan horizontal.

En d'autres termes, le moyen de basculement 13 est un moyen de basculement latéral qui permet un basculement des aliments selon une direction sensiblement transversale à la direction de déplacement de la pale 8 relativement au récipient 2. La direction de basculement D peut être confondue avec la direction radiale, laquelle est bien entendu définie par rapport au mouvement de rotation et à l'axe de rotation X-X'. Dans ce cas, la direction D présente une unique composante, qui est radiale. Cependant, de façon plus générale, la direction D présente, outre une composante radiale essentielle, également une composante tangentielle minoritaire, de sorte que le mouvement des aliments ne s'effectue pas selon une direction purement radiale, mais essentiellement radiale. De préférence, le moyen de basculement 13 est conformé pour assurer, sous l'effet du mouvement relatif de rotation, le basculement de ladite fraction des aliments selon une direction de basculement D qui forme avec la direction radiale un angle inférieur ou égal à 60°, et de préférence inférieur ou égal à 30°.

Dans les modes de réalisation illustrés aux figures, sur lesquels la description qui suit va se concentrer et qui correspondent à des manières préférentielles de mettre en oeuvre l'invention, le moyen de basculement 13 est avantageusement conformé pour assurer, sous l'effet du mouvement relatif de rotation, le basculement d'au moins une fraction des aliments sensiblement en direction du centre du récipient 2. Dans les exemples illustrés aux figures, le centre du récipient 2 est sensiblement défini par l'axe de symétrie X-X'. Dans ce cas, le moyen de basculement 13 assure donc le basculement des aliments vers l'axe X-X'.

Le moyen de basculement 13 est destinée à interagir avec au moins une fraction des aliments, sous l'effet du mouvement relatif de rotation, pour faire basculer lesdits aliments. Ainsi, lorsque le récipient 2 et la pale 8 sont animés du mouvement relatif de rotation, des zones de la pale 8, dont fait partie le moyen de basculement 13, deviennent des zones « *actives »* à l'encontre des aliments, c'est-à-dire des zones capables d'exercer un effort sur ces aliments, ledit effort pouvant d'ailleurs être simplement un effort de réaction. On comprend donc qu'au sens de l'invention le moyen de basculement 13 forme préférentiellement une surface de remuage, c'est-à-dire une surface qui agit directement sur les aliments pour les remuer.

Grâce à la présence du moyen de basculement 13, et à la conformation spécifique de ce dernier au sein du récipient 2, les aliments présents au sein du récipient 2 vont être ramenés vers le centre du récipient 2 lorsqu'ils rencontrent le moyen de basculement 13, lequel tourne avec la pale 8 au sein du récipient 2. De surcroît, le mouvement des aliments vers le centre du récipient 2 est un mouvement de basculement, c'est à dire un mouvement dans lequel chaque aliment, tout en se déplaçant vers le centre du récipient 2 selon la direction D, subit sensiblement simultanément une rotation, et en particulier une rotation sur lui-même, de préférence autour d'un axe sensiblement parallèle à la direction du mouvement de la pale 8 relativement au récipient 2.

En d'autres termes, le moyen de basculement 13 est spécifiquement conçu pour favoriser un renversement ou culbutage latéral contrôlé des aliments vers le centre du récipient 2. Ce basculement permet notamment de changer l'orientation d'un aliment donné relativement au fond 2A du récipient 2 au cours du cycle de cuisson, ce qui favorise une cuisson homogène sur toutes les faces de chaque aliment. Le moyen de basculement 13 contribue donc à former un moyen de retournement des aliments sur eux-mêmes. A cette fin, la forme du moyen de basculement 13 et la vitesse de rotation relative des récipient 2 et pale 8 sont choisis pour permettre le basculement radial des aliments recherché, et pour éviter notamment tout broyage des aliments, ou toute projection de ces derniers.

Ainsi, le moyen de basculement 13 engendre à la fois et de façon sensiblement concomitante un déplacement des aliments vers le centre du récipient 2 et un retournement des aliments sur eux-mêmes, retournement qui permet notamment de modifier l'orientation de l'aliment en regard de son environnement. Cette mise en mouvement spécifique des aliments permet un excellent brassage des aliments, sans pour autant les détériorer.

Ce brassage optimisé permet notamment, lorsque de la matière grasse a été introduite au sein du récipient 2 avec les aliments, de favoriser une enduction sensiblement uniforme et homogène des aliments par ladite matière grasse.

Cette disposition technique s'avère donc particulièrement avantageuse lorsque l'appareil 1 conforme à l'invention constitue une friteuse à cuisson sèche. Par *« cuisson sèche* », on désigne ici un mode de cuisson d'aliments sans immersion de ces derniers dans un bain d'huile ou de matière grasse, que cette immersion soit d'ailleurs temporaire ou constante pendant le cycle de cuisson. L'expression *« cuisson sèche »* désigne au contraire une cuisson dans laquelle les aliments sont certes *« mouillés »* par un médium de cuisson (de l'huile par exemple), mais sans pour autant être plongés ou baigner dans ledit médium.

En cela, le principe de fonctionnement d'une friteuse à cuisson sèche diffère très nettement de celui d'une friteuse classique à bain d'huile.

Dans le cas préférentiel où l'appareil 1 est conçu pour fonctionner comme une friteuse à cuisson sèche, le récipient 2 et la pale 8 forment alors un moyen pour enduire automatiquement les aliments d'une pellicule de matière grasse, de préférence sensiblement uniforme et homogène, par brassage desdits aliments avec de la matière grasse.

Ce moyen d'enduction automatique de matière grasse s'avère particulièrement efficace lorsque la pale 8 est équipée, comme dans la présente invention, d'un moyen de basculement 13 favorisant un déplacement centripète (ou centrifuge) des aliments, associé à une rotation des aliments sur eux-mêmes.

De préférence, la pale 8 est agencée pour remuer des aliments se présentant sous forme d'une pluralité de morceaux de consistance sensiblement solide dont la dimension unitaire (ou calibre) est de l'ordre de celle d'une frite. Afin d'éviter toute dégradation des aliments, la pale 8 présentera de préférence des formes arrondies, non agressives, permettant l'échappement des aliments avant blocage et évitant toute perforation ou écrasement des aliments.

Avantageusement, le moyen de basculement 13 comporte une surface de basculement 13A le long de laquelle ladite fraction des aliments est susceptible de se déplacer sous l'effet du mouvement relatif de rotation, ladite surface de basculement 13A présentant une diminution de son aire en direction de l'arrière relativement au sens de déplacement de la pale 8 par rapport au récipient 2, pour entraîner ledit basculement de ladite fraction des aliments.

En d'autres termes, la surface de basculement 13A rétrécit de l'amont vers l'aval, en considération du sens de déplacement des aliments contre et le long de ladite surface 13A, ce rétrécissement étant suffisant pour entraîner une perte d'appui des aliments contre la surface 13A et un basculement subséquent desdits aliments.

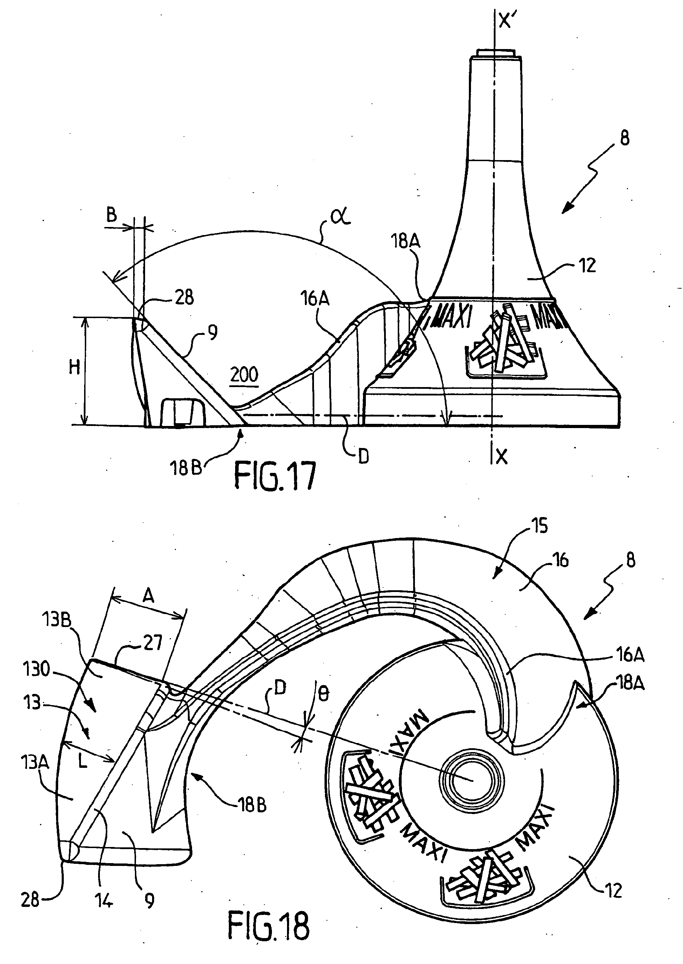

Tel que cela est en particulier illustré aux figures 17 et 18, la surface de basculement 13A présente de préférence un caractère sensiblement plan, et s'étend entre une arête amont 27, de largeur A, et une arête aval 28, de largeur B, la largeur A étant supérieur à la largeur B. L'arête amont 27 correspond au bord d'attaque de la surface de basculement 13A, c'est à dire à la zone qui va la première, sous l'effet du mouvement relatif de rotation, engager les aliments de façon que ceux-ci se déplacent le long de la surface 13A, sensiblement en direction de l'arête aval 28. La largeur L de la surface de basculement 13A varie avantageusement de manière régulière et progressive entre les grandeurs A et B.

Ainsi, au fil de leur progression le long de la surface de basculement 13A, laquelle est de préférence située à distance du fond 2A du récipient 2, les aliments vont être confrontés à une absence progressive de support du à la diminution de la largeur L de la surface 13A, ce qui va conduire finalement à une déstabilisation latérale des aliments et à leur basculement en direction du centre et du fond 2A du récipient, sous l'effet de la gravité. Tel que cela est illustré aux figures, la surface de basculement 13A est avantageusement positionnée de manière suffisamment proche de la paroi latérale 2B du récipient 2 pour empêcher les aliments de basculer vers la périphérie de l'appareil, et générer uniquement un basculement des aliments vers le centre de l'appareil.

Avantageusement, la pale 8 comprend en outre un moyen de soulèvement 130 conformé pour soulever, sous l'effet du mouvement de rotation, au moins une fraction des aliments.

De préférence, le moyen de soulèvement 130 est orientée pour exercer un effort de poussée avec une composante verticale sur les aliments dans la direction du mouvement de rotation.

Avantageusement, le moyen de soulèvement 130 comporte une surface de soulèvement 13B inclinée vers l'arrière en considération du sens de déplacement de la pale 8 par rapport au récipient 2 pour assurer ledit soulèvement d'au moins une fraction des aliments sous l'effet du mouvement relatif de rotation.

De préférence, tel que cela est illustré aux figures, la surface de basculement 13A et la surface de soulèvement 13B sont sensiblement confondues, c'est à dire qu'une surface unique et commune 13A, 13B assure une double fonction de soulèvement et de basculement.

Tel que cela est illustré aux figures, la surface de soulèvement 13B forme avantageusement une pente inclinée pour soulever les aliments sous l'effet du mouvement relatif de rotation, par effet de rampe. La surface de soulèvement 13B forme ainsi avantageusement un moyen de décollement des aliments du fond 2A du récipient 2, permettant d'accroître la distance verticale entre les aliments soumis à l'action de ladite surface de soulèvement 13B et le fond 2A. La surface de soulèvement 13B forme un angle β ouvert, c'est-à-dire supérieur à 90 degrés, avec le plan dans lequel est inscrit le fond 2A (ou avec un plan parallèle à ce dernier). De préférence, l'angle β est sensiblement compris entre 100 et 160°. Il a été constaté qu'un angle β compris entre 120 et 140°, et de préférence sensiblement égal à 130°, permettait d'optimiser la fonction de soulèvement des aliments recherchée.

Avantageusement, le sommet de la surface de soulèvement 13B, qui correspond à l'arête 28 (cf. figure 18), est situé à une altitude inférieure à celle du bord libre 2C du récipient, de manière à éviter de salir le couvercle 3C lors du fonctionnement de l'appareil.

Afin de favoriser le basculement des aliments, il est avantageux de prévoir une surface de soulèvement 13B dont la hauteur H (cf. figure 17) séparant le point haut du point bas, c'est à dire l'arête amont 27 de l'arête aval 28, est compris sensiblement entre 0,25 et 0,9 fois la longueur d'un aliment, lorsque ce dernier présente un caractère longiligne (cas d'une frite). Par exemple, la hauteur H pourra être comprise entre environ 25 et 75 mm.

De façon préférentielle, le bord d'attaque de la surface de soulèvement 13B, qui correspond dans l'exemple illustré aux figures au bord d'attaque de la surface de basculement 13B, c'est à dire à l'arête amont 27, est orienté relativement au mouvement relatif de la pale 8 et du récipient 2 pour canaliser les aliment sensiblement vers l'intérieur du récipient. A cette fin, l'arête amont 27 forme par exemple avec la direction radiale un angle 9 rentrant, de l'ordre de quelques degrés, par exemple compris entre 1 et 5°, et préférentiellement égal à 3°. Cette disposition technique favorise un brassage « *fluide »* des aliments, sans coincement de ces derniers entre la surface de soulèvement/basculement 13A, 13B et la paroi latérale 2B du récipient 2.

Avantageusement, tel que cela est illustré aux figures, le moyen de basculement 13 et le moyen de soulèvement 130 sont agencés l'un relativement à l'autre pour assurer, sous l'effet du mouvement relatif de rotation, le soulèvement d'au moins une fraction des aliments puis le basculement de ladite fraction selon ladite direction de basculement D, laquelle présente majoritairement une composante radiale dans le plan de rotation. Dans les modes de réalisation illustrés aux figures, le moyen de basculement 13 et le moyen de soulèvement 130 sont agencés l'un relativement à l'autre pour assurer, sous l'effet du mouvement relatif de rotation, le soulèvement d'au moins une fraction des aliments puis le basculement de ladite fraction sensiblement en direction du centre du récipient 2. En d'autres termes, la surface unique formant surface de soulèvement 13B et surface de basculement 13A est conformée pour, sous l'effet du mouvement relatif de rotation, soulever en premier lieu les aliments, grâce à sa forme de rampe inclinée, puis se dérober progressivement à l'appui des aliments jusqu'à les faire basculer, grâce à la diminution progressive de sa largeur L.

L'invention n'est cependant pas limitée à des moyens permettant un tel mouvement séquentiel des aliments. Il est par exemple tout à fait envisageable, sans pour autant que l'on sorte du cadre de l'invention, que le moyen de basculement 13 et le moyen de soulèvement 130 soient agencés l'un relativement à l'autre pour assurer, sous l'effet du mouvement relatif de rotation et de façon sensiblement concomitante, le soulèvement d'au moins une fraction des aliments et le basculement de ladite fraction selon ladite direction de basculement D présentant majoritairement une composante radiale, c'est à dire par exemple sensiblement en direction du centre du récipient 2. Dans ce cas, le soulèvement et le basculement se font donc de manière sensiblement simultanée. Un tel double mouvement peut par exemple être obtenu à l'aide d'une surface de soulèvement et de basculement unique qui présente une forme en vrille permettant le soulèvement et le basculement simultanés des aliments.

Il est également envisageable, sans pour autant que l'on sorte du cadre de l'invention, que les surfaces de basculement 13A et de soulèvement 13B ne soient pas confondues, comme dans les exemples illustrés aux figures, mais soient sensiblement distinctes. Par exemple, on peut envisager la mise en oeuvre d'une surface de soulèvement inclinée, de largeur L sensiblement constante, prolongée vers l'aval par une surface de basculement sensiblement horizontale mais dont la largeur diminue progressivement vers l'arrière, en considération du sens du mouvement de la pale 8 relativement au récipient 2. Dans une telle configuration, les aliments sont ainsi tout d'abord élevés jusqu'à la surface de basculement par la surface de soulèvement, puis basculent lors de leur progression le long de la surface de basculement horizontale dont l'aire de support diminue vers l'aval. Dans ce cas de figure, la surface de basculement est donc située, du point de vue du flux d'aliments qui frappe la pale 8, à l'aval de la surface de soulèvement.

Avantageusement, la pale 8 comprend un déflecteur latéral 9 formant une pente s'étendant à partir du moyen de basculement 13 selon ladite direction de basculement D, pour que ladite fraction d'aliments basculant sous l'effet du moyen de basculement 13 bascule le long dudit déflecteur latéral 9. Dans le cas des modes de réalisation illustré aux figures, le déflecteur latéral 9 forme une pente s'étendant à partir du moyen de basculement 13 en direction du centre du récipient 2.

De préférence, tel que cela est illustré aux figures, le déflecteur latéral 9 comprend au moins une surface inclinée destinée à accompagner le basculement des aliments. Selon les modes de réalisation illustrés aux figures, la surface inclinée s'étend préférentiellement sensiblement en regard du centre du récipient 2 pour canaliser en douceur les aliments vers l'intérieur et le fond 2A du récipient 2, dans le sillage de la pale 8. Le déflecteur latéral 9 forme ainsi préférentiellement un pan incliné contre et sur lequel les aliments vont chuter et basculer latéralement, par exemple en direction du centre du récipient 2. De préférence, la surface inclinée de déflexion latérale forme un angle a ouvert, c'est-à-dire supérieur à 90 °, avec le plan dans lequel s'inscrit le fond 2A. De façon préférentielle, l'angle α est compris entre 100 et 140°. Il a également été constaté qu'un angle α compris entre 128 et 134°, et de préférence égal à 132°, est de nature à optimiser le phénomène de brassage des aliments recherché.

Tel que cela est illustré aux figures, le déflecteur latéral 9 et le moyen de soulèvement / basculement 13,130 sont séparées par une arête commune 14. Le déflecteur latéral 9, le moyen de soulèvement 130 et le moyen de basculement 13 forment ainsi une pièce monobloc unique à deux facettes, l'une des facettes correspond aux surfaces de soulèvement 13B et de basculement 13A, tandis que l'autre facette correspond au déflecteur latéral 9.

Avantageusement, tel que cela est illustré aux figures, le moyen de basculement 13 et le moyen de soulèvement 130 sont positionnés sensiblement vers la périphérie du récipient 2, de préférence à proximité immédiate de la paroi latérale 2B du récipient 2, le moyen de basculement 13 étant conformé pour assurer, sous l'effet du mouvement relatif de rotation, le basculement de ladite fraction des aliments sensiblement en direction du centre du récipient 2.

Avantageusement, la pale 8 comprend également un moyen 15 pour repousser les aliments en direction du moyen de basculement 13, sous l'effet du mouvement relatif de rotation. Dans les modes de réalisation illustrés aux figures, le moyen 15 est plus préférentiellement conçu pour repousser les aliments en direction de la périphérie du récipient 2. Dans les exemples illustrés aux figures, le moyen 15 est conformé pour déplacer de façon centrifuge les aliments en direction de la paroi latérale 2B, de manière à diriger les aliments vers les moyens de soulèvement 130 et de basculement 13.

De façon préférentielle, le moyen 15 pour repousser les aliments en direction du moyen de basculement 13 comporte un déflecteur frontal 16 orienté pour exercer un effort de poussée sur les aliments dans la direction du mouvement de rotation, c'est-à-dire selon une trajectoire circulaire autour de l'axe X-X' dans le cas des variantes illustrées aux figures. Afin de favoriser l'effet de déplacement centrifuge des aliments, le déflecteur frontal 16 présente avantageusement, selon la direction verticale définie par l'axe X-X', une hauteur suffisante pour sensiblement empêcher les aliments de passer par dessus lui. De préférence, tel que cela est illustré aux figures, la projection du déflecteur frontal 16 selon un plan horizontal (perpendiculaire à l'axe X-X') présente un profil sensiblement courbé vers l'arrière en considération du sens 17 de mouvement de la pale 8 relativement au récipient 2. En d'autres termes, le déflecteur frontal 16 présente un bord d'attaque convexe pour amener les aliments vers la périphérie du récipient 2. De préférence, le déflecteur frontal 16 présente un bord d'attaque fuyant en direction du moyen de basculement 13, c'est à dire, dans les exemples illustrés aux figures, un profil fuyant vers l'arrière (en considération du sens de rotation de la pale 8 relativement au récipient 2) et la périphérie du récipient 2, par exemple en forme de volute, tel que cela est particulièrement visible sur la figure 18. La courbure vers l'arrière du déflecteur frontal 16 est ainsi conçue pour d'une part favoriser un déplacement centrifuge des aliments le long du déflecteur 16 lorsque ce dernier, mis en rotation avec la pale 8, vient impacter les aliments, et d'autre part éviter de créer un paquet d'aliments tournant de concert avec la pale 8 selon une trajectoire sensiblement purement circulaire, sans déplacement centrifuge.

De préférence, le déflecteur frontal 16 présente, dans le plan vertical, un profil courbé vers le haut et vers l'arrière, en considération du sens de rotation de la pale 8 relativement au récipient 2. Ceci favorise, notamment lorsqu'une quantité importante d'aliments est présente dans le récipient 2, un brassage efficace et fluide des aliments.

Avantageusement, le moyen 15 pour repousser les aliments en direction de la périphérie du récipient 2 est situé, en considération du sens 17 de déplacement de la pale 8, devant le moyen de basculement 13 et le moyen de soulèvement 130. En d'autres termes, le déflecteur frontal 16 est situé à l'amont du moyen de basculement 13 et du moyen de soulèvement 130, en considération du sens du flux d'aliments venant en collision avec la pale 8 (vue de cette dernière), lors du déplacement en rotation de la pale 8, au sein des aliments, dans le récipient 2.

Ainsi, les aliments sont en premier lieu soumis à l'action de déplacement centrifuge du déflecteur frontal 16, lequel déplace les aliments vers la périphérie du récipient 2 jusqu'à la surface de soulèvement 130 qui soulève les aliments, lesquels basculent ensuite vers le centre du récipient 2 le long du déflecteur latéral 9. Cette cinématique très particulière propre à l'invention permet un excellent brassage des aliments, garantissant une cuisson homogène et un recouvrement sensiblement uniforme des aliments par un éventuel médium de cuisson, tel que de la matière grasse (huile par exemple).

Avantageusement, la pale 8 comporte un passage 200 pour les aliments, ménagé entre le moyen 15 pour repousser les aliments et le moyen de basculement 13. En d'autres termes, ce passage 200 correspond à une zone de la pale 8 au niveau de laquelle, compte-tenu en particulier de la hauteur de la pale 8 dans cette zone, il est plus facile pour les aliments de franchir la pale 8.

De façon préférentielle, tel que cela ressort notamment de la figure 17, le moyen 15 pour repousser les aliments et le moyen de basculement 13 ménagent entre eux une échancrure qui correspond audit passage 200 et qui présente, en projection dans un plan vertical, sensiblement une forme en V, les deux bras du V correspondant respectivement au déflecteur latéral 9 et à l'arête supérieure 16A du déflecteur frontal 16.

De préférence, le point de jonction des bras du V est situé sensiblement à proximité des moyens de soulèvement 130 et de basculement 13, ce qui permet de favoriser le basculement des aliments tout en concentrant le maximum d'aliments vers lesdits moyens de soulèvement 130 et de basculement 13. Par exemple, le point de jonction des bras du V est situé sensiblement entre 3/5 et 4/5 de la distance (correspondant au *« rayon »* de la pale) séparant les extrémités de la pale 8 dans le plan horizontal, du centre vers la périphérie du récipient 2.

Avantageusement, la pale 8 comprend au moins un premier bras 18 s'étendant d'une première extrémité interne 18A à une première extrémité externe 18B, la première extrémité interne 18A étant solidaire du moyeu 12 tandis que la première extrémité externe 18B est solidaire du moyen de basculement 13, ainsi que de préférence du moyen de soulèvement 130. Le premier bras 18 assure ainsi la transmission au moyen de soulèvement 130 et au moyen de basculement 13 du mouvement de rotation conféré au moyeu 12 par l'arbre 10.

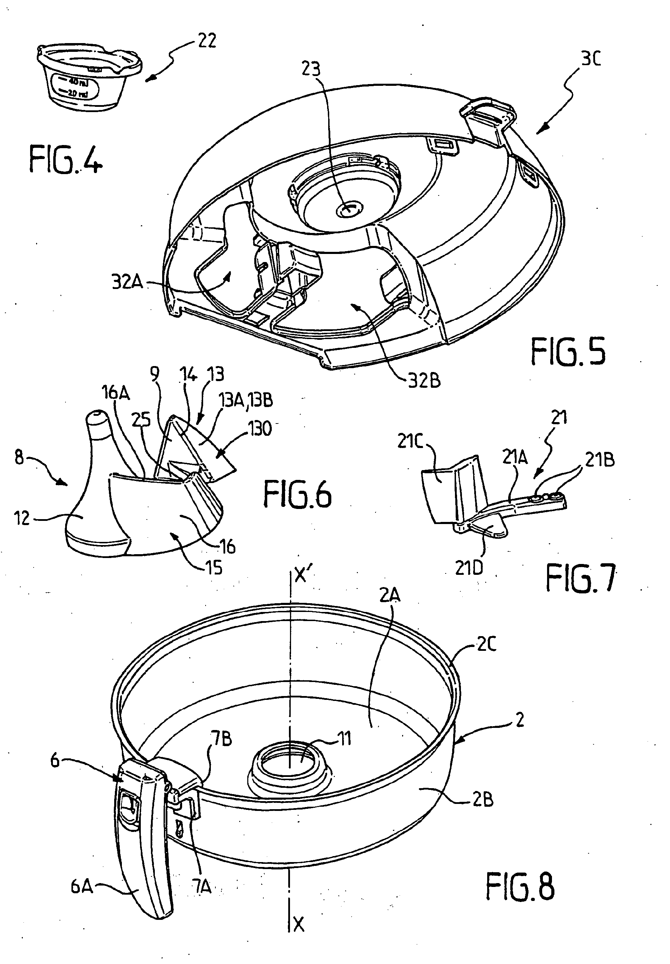

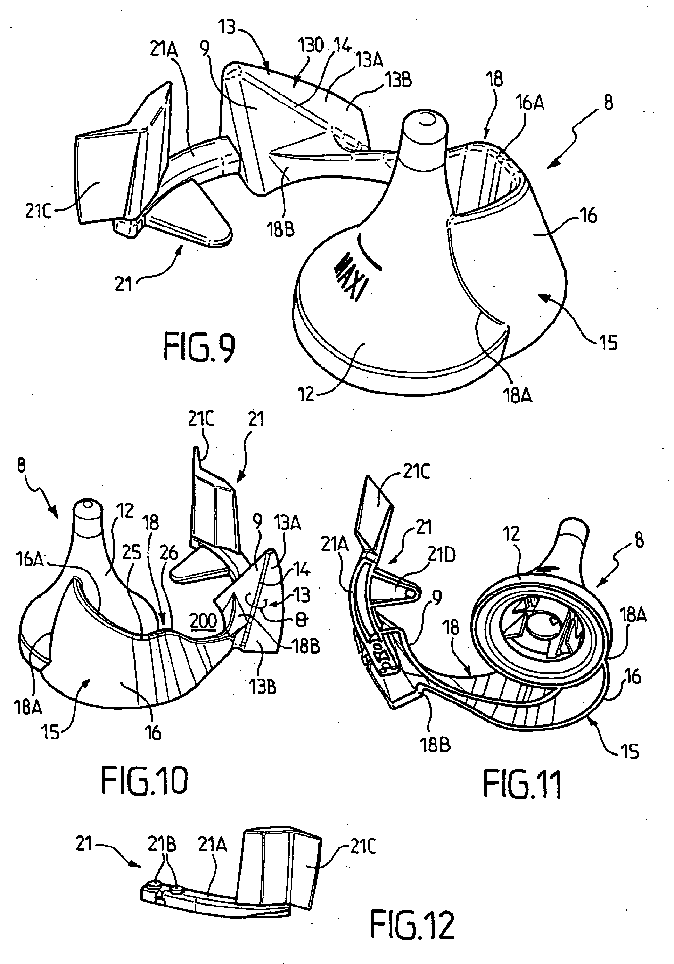

Avantageusement, le moyen 15 pour repousser les aliments en direction de la périphérie du récipient 2 est solidaire du premier bras 18, et est interposé entre lesdites premières extrémités internes 18A et externes 18B. De façon préférentielle, le moyen 15 est directement intégré au premier bras 18, et vient de matière avec ce dernier. Grâce à cette mesure technique, qui correspond à la première variante de réalisation illustrée aux figures 1 à 13, 17 et 18 la pale 8 présente une construction particulièrement simple et compacte où un bras 18 unique suffit pour assurer l'essentiel des fonctions conduisant à un remuage optimal.

La pale 8 se présente ainsi sous la forme d'un moyeu 12, à partir duquel s'étend un bras 18 en forme de volute, pourvu à son extrémité d'un aileron relevé à deux facettes formant le moyen de soulèvement 130, le moyen de basculement 13 et le déflecteur latéral 9.

Une pale 8 ainsi conçue s'avère particulièrement facile, rapide et peu onéreuse à fabriquer, par exemple par injection de matière plastique.

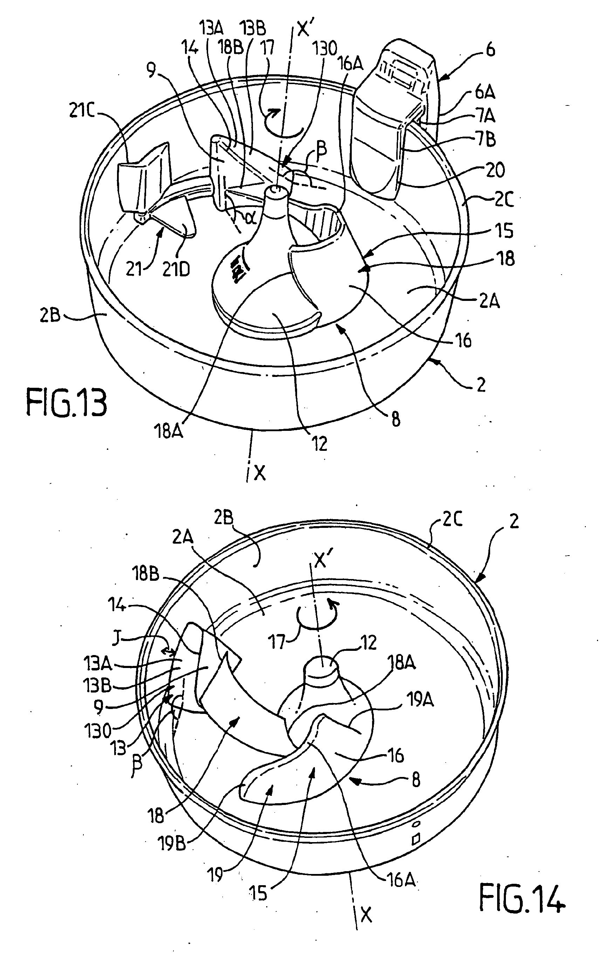

Dans un second mode de réalisation illustré à la figure 14, la pale 8 peut cependant comprendre un deuxième bras 19 s'étendant entre une deuxième extrémité interne 19A et une deuxième extrémité externe 19B, la deuxième extrémité interne 19A étant solidaire du moyeu 12, tandis que le moyen 15 pour repousser les aliments en direction de la périphérie du récipient 2 est solidaire du deuxième bras 19, et est interposé entre lesdites deuxième extrémité interne 19A et externe 19B. Dans ce mode de réalisation illustré à la figure 14, la pale 8 comprend ainsi au moins deux bras distincts 18, 19, le deuxième bras 19 étant positionné devant le premier bras 18 en considération du sens 17 de rotation de la pale 8. Le premier bras 19, qui porte les moyens 15 pour repousser les aliments en direction de la périphérie du récipient 2 permet ainsi d'amener les aliments vers la périphérie, de telle sorte que ces derniers sont ensuite soumis à l'action de soulèvement et de basculement opérées respectivement par le moyen de soulèvement 130 et le moyen de basculement 13.

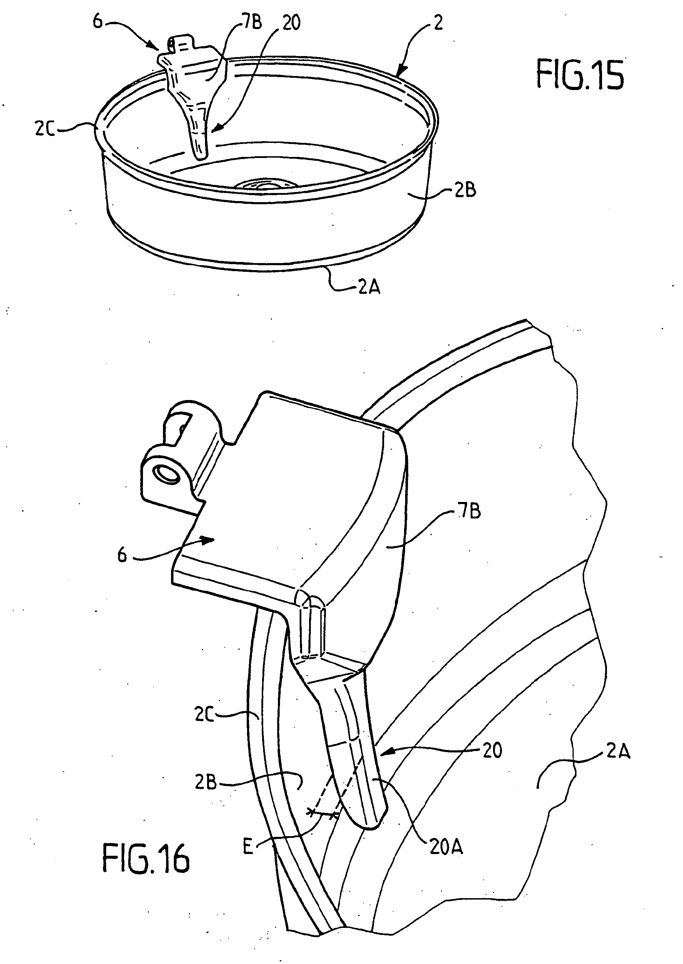

Avantageusement, l'appareil 1 comprend un obstacle 20 dont deux modes de réalisation distincts sont illustrés respectivement d'une part à la figure 13, et d'autre part aux figures 15 et 16. L'obstacle 20 est monté au sein de l'appareil 1 pour que la pale 8 soit mobile relativement à l'obstacle 20 sous l'effet du mouvement relatif de rotation, ledit obstacle 20 étant positionné pour entrer en contact avec au moins une partie des aliments, de façon à empêcher l'accumulation, contre la pale 8, d'un bloc d'aliments qui ne se déplacent sensiblement pas les uns relativement aux autres. En d'autres termes, l'obstacle 20 est placé sensiblement sur la trajectoire des aliments poussés par la pale 8 sous l'effet du mouvement de rotation relatif, pour empêcher un mouvement global d'un bloc d'aliments compact qui ne sont plus brassés. La pale 8 est ainsi mobile par rapport à un obstacle 20 susceptible d'occuper une position proche du moyen de basculement 13 sous l'effet du mouvement de rotation de la pale 8 par rapport au récipient 2.

Ainsi l'obstacle 20 bloque une partie des aliments et facilite par conséquent l'action du moyen de basculement 13.

Avantageusement, tel que cela est illustré notamment à la figure 13, l'obstacle 20 est monté solidaire de la paroi latérale 2B, à l'intérieur du récipient 2. De façon préférentielle, l'obstacle 20 est solidaire, et de façon encore plus préférentielle fait partie intégrante, de la poignée 6, et plus précisément s'étend à partir de la seconde mâchoire 7B de ladite poignée 6. L'obstacle 20 fait ainsi saillie d'une épaisseur E à partir de la paroi latérale 2B, en direction de l'intérieur du récipient 2. Un jeu J, au moins légèrement supérieur à l'épaisseur E, est ménagé entre la paroi latérale 2B et la pale 8, afin de permettre à la pale de tourner librement sans buter contre l'obstacle 20.

Il a été établi, en regard du profil spécifique de la pale 8 objet de l'invention, qu'un obstacle 20 faisant seulement très légèrement saillie de la paroi latérale 2B était suffisant pour empêcher tout déplacement compact des aliments. Plus précisément, il a été établi dans le cadre de l'invention qu'un obstacle 20 présentant une épaisseur E sensiblement inférieure à la dimension caractéristique de l'épaisseur moyenne d'un aliment permettait d'obtenir le résultat souhaité en évitant tout coincement d'aliment contre l'obstacle 20. De façon préférentielle, l'épaisseur E est sensiblement égale à la moitié de la dimension caractéristique de l'épaisseur moyenne d'un aliment. Dans le cas où l'appareil 1 est utilisé pour cuire des frites, l'épaisseur E est préférentiellement inférieure à la largeur moyenne d'une frite, de façon à éviter le coincement de frites derrière l'obstacle 20, sans que la pale 8 ne puisse les atteindre pour les dégager. Par exemple, l'épaisseur E est sensiblement inférieure à 5 mm, et de façon encore plus préférentielle est comprise entre 2 et 3 mm. Cette dernière plage dimensionnelle permet d'obtenir un excellent compromis entre la fonction d'obstacle destinée à empêcher les aliments de tourner de concert avec la pale 8 et la fonction anti-coincement.

Afin de favoriser encore la fonction anti-coincement, l'obstacle 20, qui se présente préférentiellement sous la forme d'un doigt rectiligne 20A s'étendant sensiblement verticalement le long de la paroi latérale 2B (cf. figures 15 et 16), présente de préférence des arêtes arrondies, permettant un échappement fluide des aliments, sans détériorer ces derniers.

Avantageusement, l'appareil 1 comprend également un organe de raclage 21 destiné à balayer la paroi latérale 2B sous l'effet du mouvement relatif de rotation, en vue de détacher les aliments qui auraient pu adhérer à ladite paroi latérale 2B. Un tel organe de raclage s'avère particulièrement intéressant lorsque la cuisson est effectuée sensiblement en l'absence de matière grasse, par exemple pour cuire des morceaux de légumes. En revanche, l'organe de raclage 21 n'est pas forcément nécessaire, voire même inutile lorsque les aliments sont des morceaux de pommes de terre destinés à devenir des frites.

De façon préférentielle, l'organe de raclage 21 est monté de façon amovible sur la pale 8.

Par exemple, tel que cela est illustré aux figures, l'organe 21 comprend avantageusement une patte 21A portant des moyens de fixation 21 B, formés par exemple par des orifices d'emboîtement destinés à coopérer avec des moyens de fixation complémentaires portés par la pale 8.

De préférence, la patte 21A est destinée à venir s'emboîter vers la première extrémité externe 18B du premier bras 18.

Avantageusement, la patte 21A porte un volet de raclage souple 21C, réalisé par exemple en un matériau élastomère. Le volet de raclage 21C présente une arête externe destinée à venir épouser et balayer l'intérieur de la paroi latérale 2B lorsque la pale 8 est en rotation. Afin de stabiliser la patte 21A, cette dernière est pourvu d'un aileron 21 D destiné à venir en appui contre le fond 2A, en vue de s'opposer à d'éventuels efforts de désolidarisation de la patte 21A et de la pale 8 exercés par la paroi latérale 2A sur le volet 21C.

Dans ce qui précède, il a été décrit, en référence aux variantes illustrées aux figures, un appareil 1 dans lequel le moyen de basculement 13 est conformé pour générer un basculement des aliments vers le centre, et est situé à cette fin de préférence vers la périphérie du récipient 2. Il est cependant tout à fait envisageable, sans pour autant que l'on sorte du cadre de l'invention, que le moyen de basculement 13 soit conformé pour générer un basculement des aliments en direction de la périphérie du récipient 2. L'invention concerne donc également un appareil 1 de cuisson d'aliments comprenant d'une part un récipient 2 destiné à contenir les aliments et d'autre part une pale 8 disposée au sein du récipient 2, lesdits récipient 2 et pale 8 étant conçus pour être animé d'un mouvement relatif de rotation afin de remuer les aliments dans le récipient 2, la pale 8 comprenant un moyen de basculement conformé pour assurer, sous l'effet du mouvement relatif de rotation, le basculement d'au moins une fraction des aliments sensiblement en direction de la périphérie du récipient 2. Dans ce cas de figure non illustré, le moyen de basculement s'étend préférentiellement à proximité du centre du récipient 2. De préférence, tout comme dans les variantes illustrées aux figures, la pale 8 comprend un moyen de soulèvement conformé pour soulever, sous l'effet du mouvement de rotation, au moins une fraction des aliments, ce moyen de soulèvement étant lui aussi disposé à proximité du centre du récipient 2. Le moyen de basculement et le moyen de soulèvement sont préférentiellement agencés l'un relativement à l'autre pour assurer, sous l'effet du mouvement relatif de rotation, le soulèvement d'au moins une fraction des aliments puis le basculement de ladite fraction sensiblement en direction de la périphérie du récipient 2. Il est également avantageux, dans ce cas de figure, de prévoir un moyen pour repousser les aliments en direction du centre du récipient 2, et par exemple un moyen avec un bord d'attaque concave.

En d'autres termes, dans cette variante de réalisation non illustrée aux figures, une disposition strictement inverse à celle des variantes illustrée aux figures 1 à 14 est envisagée, c'est-à-dire que les aliments sont tout d'abord ramenés de la périphérie vers le centre, puis sont soulevés pour ensuite basculer en direction de la périphérie du récipient. Cette variante de réalisation peut donc être considérée comme étant *« symétrique »* aux variantes de réalisation illustrées aux figures.

En définitive, l'invention vise de manière générale un appareil de cuisson d'aliments comprenant d'une part un récipient 2 destiné à contenir les aliments et d'autre part une pale 8 disposée au sein du récipient 2, lesdits récipient 2 et pale 8 étant conçus pour être animés d'un mouvement relatif de rotation afin de remuer les aliments dans le récipient 2, la pale 8 comprenant un moyen de basculement 13 conformé pour assurer, sous l'effet du mouvement relatif de rotation, le basculement latéral d'au moins une fraction des aliments, c'est à dire un déplacement des aliments selon une direction majoritairement, et de préférence essentiellement, radiale, combiné avec une rotation des aliments sur eux-mêmes, autour d'un axe sensiblement perpendiculaire à ladite direction de déplacement.

Le fonctionnement des variantes de réalisation illustrées aux figures va maintenant être décrit de manière détaillée, en prenant l'exemple de la réalisation de frites à partir de morceaux longilignes de pommes de terre coupées.

L'utilisateur soulève tout d'abord le couvercle 3C qui lui donne accès à l'intérieur du corps principal 3. L'utilisateur introduit alors le récipient 2 au sein du corps principal 3 en posant ledit récipient 2 sur les plots de support 4. L'arbre 10 fait alors saillie, à travers l'orifice 11, du fond 2A. L'utilisateur coiffe ensuite l'arbre 10 de la pale 8, et plus précisément enfile le moyeu 12 de la pale 8 sur l'arbre 10.

L'utilisateur verse ensuite des morceaux de pommes de terre dans le récipient 2, ainsi qu'une petite quantité d'huile. Par *« petite quantité »* on désigne ici une quantité d'huile qui suffit à enduire sensiblement uniformément les morceaux de pommes de terre, au contraire d'un bain d'huile dans lequel les morceaux de pommes de terre seraient entièrement immergés. Afin de faciliter ce dosage d'une petite quantité d'huile, l'appareil 1 peut d'ailleurs comprendre un gobelet doseur 22 conçu pour être monté de façon amovible sur le couvercle 3C, par exemple, comme cela est illustré, à l'aide d'un système de fixation à baïonnettes. Avantageusement, le gobelet doseur 22 peut faire office de poignée pour la manipulation du couvercle 3C lorsqu'il est solidarisé à ce dernier.

Avantageusement, on peut prévoir également un office 23 ménagé dans le couvercle 3C pour alimenter en huile le récipient 2. Dans ce cas, l'alimentation en huile s'effectue lorsque le couvercle 3C est fermé.

Une fois les aliments et la matière grasse disposés au sein du récipient 2, et le couvercle fermé, l'utilisateur lance un cycle de cuisson en pressant un bouton de commande 24 disposé sur le corps principal 3.

Cela a pour effet de mettre en rotation l'arbre 10, qui lui-même entraîne la pale 8 en rotation dans le sens 17 autour de l'axe X-X'. Sous l'effet de la mise en rotation de la pale 8, le déflecteur frontal 16 repousse les aliments vers la périphérie du récipient 2, en direction de la surface de soulèvement 13B, qui est ici confondue avec la surface de basculement 13A. La surface de soulèvement 13B soulève alors les aliments jusqu'à ce que ces derniers ne soient plus supportés, compte-tenu de la diminution de la largeur L, par la surface 13A. Les aliments basculent alors latéralement le long du déflecteur latéral 9 vers le centre du récipient 2. Cette mise en mouvement spécifique des morceaux de pommes de terre permet un excellent brassage de ces derniers avec la matière grasse, de sorte que les morceaux de pommes de terre peuvent ainsi être sensiblement enduits uniformément de matière grasse.

Tout en subissant ce brassage, les morceaux de pommes de terre sont également soumis à un flux d'air chaud provenant des conduits 31A, 31B disposés dans la charnière 5 et émergeant du couvercle 3C. Le remuage des aliments à l'aide de la pale 8 permet ainsi une cuisson uniforme des morceaux de pommes de terre qui sont soumis de manière homogène au flux d'air chaud.

Pendant la cuisson, les morceaux de pommes de terre passent successivement par les trois stades suivants de consistance :
- consistance de la pomme de terre crue, c'est-à-dire humide, collante, ferme, rigide et non grasse ;
- consistance molle de la pomme de terre cuite à la vapeur, c'est-à-dire molle, souple, glissante et fragile ;
- consistance de la pomme de terre frite, c'est-à-dire rigide, moelleuse à l'intérieur, avec une croûte à l'extérieur grasse et glissante.

Le mode spécifique de remuage retenu par l'invention permet d'assurer un excellent brassage des morceaux de pommes de terre quel que soit le stade de consistance dans lequel ils se trouvent, et ce de manière particulièrement efficace.

A la fin du cycle de cuisson, l'utilisateur dispose ainsi de morceaux de pommes de terre présentant toutes les qualités visuelles et organoleptiques des frites, mais avec un taux de matière grasse réduit relativement à une cuisson classique par immersion dans un bain d'huile.

L'utilisateur n'a plus alors qu'à extraire le récipient 2 contenant les frites en utilisant la poignée 6 à cet effet.

Il est remarquable de noter que le mode de remuage de l'invention permet un excellent brassage indépendamment de la quantité d'aliments présents dans le récipient. En effet, dans le cas d'une quantité importante d'aliments, une partie de ces aliments va basculer par-dessus l'arête supérieure 16A du déflecteur frontal 16, tandis que le reste des aliments va être dirigé vers la périphérie du récipient 2 pour être ensuite soulevé par le moyen de soulèvement 130, puis basculé par le moyen de basculement 13.

Dans le cas d'une quantité plus faible d'aliments, l'ensemble de ces derniers sera dirigé, par le déflecteur frontal 16, vers la périphérie du récipient 2 pour être traité par le moyen de soulèvement 130 et le moyen de basculement 13. Il a également été constaté qu'un profil ondulé de l'arête supérieure 16A du déflecteur frontal 16, tel que cela est illustré aux figures, permettait d'améliorer sensiblement le remuage. En particulier, le profil illustré aux figures, dans lequel l'arête 16A présente une pente descendante à partir du moyeu 12 jusqu'à un point bas 25, pour former ensuite une protubérance 26 et suivre ensuite à nouveau une pente descendante jusqu'à proximité du fond 2A, s'avère particulièrement efficace.

Dans ce qui précède, on a décrit la réalisation de frites mettant en oeuvre des morceaux de pommes de terre fraîches et un apport d'huile. Les étapes décrites s'appliquent toutefois de la même façon à des morceaux de pommes de terre surgelés, ainsi qu'à des *« frites au four »* pré-cuites et pré-imprégnées d'huile. Dans ce dernier cas de figure, l'apport externe d'huile n'est bien entendu pas forcément nécessaire.

Dans le cas où l'utilisateur souhaite, en lieu et place de frites, obtenir une poêlée de légumes, la marche à suivre est exactement la même que celle qui a été décrite dans ce qui précède, à la différence près que l'utilisateur fixe l'organe de raclage 21 sur la pale 8 avant de positionner cette dernière au sein du récipient 2. L'organe de raclage 21 permet ainsi de détacher les morceaux de légumes qui auraient pu rester collés sur le récipient 2.

L'invention concerne également en tant que tel un procédé de cuisson d'aliments, de préférence domestique, susceptible d'être mis en oeuvre par l'appareil 1 conforme à l'invention.

Dans le procédé conforme à l'invention, on dispose les aliments à cuire au sein d'un récipient 2, une pale 8 étant installée au sein du récipient 2, en vue de remuer les aliments.

Le procédé conforme à l'invention comprend au moins une étape (i) dans laquelle, par mise en rotation relative de la pale 8 et du récipient 2, on bascule au moins une fraction desdits aliments selon une direction D qui présente, dans le plan du mouvement de rotation, majoritairement une composante radiale. Dans les exemples illustrés aux figures, on bascule ladite fraction desdits aliments de préférence en direction du centre du récipient 2.

Avantageusement, le procédé conforme à l'invention comporte une étape (ii), antérieure à l'étape (i), dans laquelle on soulève, de préférence à l'aide de la pale 8, ladite fraction des aliments par mise en rotation relative de la pale 8 et du récipient 2. En d'autres termes, la fraction des aliments à cuire est de préférence d'abord soulevée puis basculée.

Avantageusement, le procédé conforme à l'invention comprend une étape (iii) dans laquelle on introduit de la matière grasse dans le récipient 2.

De préférence, on introduit, dans l'étape (iii), une quantité de matière grasse sensiblement juste suffisante pour enduire les aliments, sans que ces derniers ne soient immergés dans un bain d'huile.

Avantageusement, on répète l'étape (i), ainsi que de préférence l'étape (ii), au moins jusqu'à ce que les aliments soient sensiblement enduits, de préférence de manière uniforme, d'une pellicule de matière grasse.

De préférence, les aliments se présentent sous forme, d'une pluralité de morceaux dont la dimension unitaire est de l'ordre de celle d'une frite. Avantageusement, le procédé conforme à l'invention constitue donc un procédé de réalisation de frites.

Il est cependant tout à fait envisageable que le procédé conforme à l'invention soit appliqué pour l'obtention de produits cuits différents des frites, et par exemple pour l'obtention de poêlées de légumes, ou pour l'obtention d'aliments rissolés, rôtis, ou encore cuits sans matière grasse.

Dans ce qui précède, on a décrit un procédé dans lequel on déplace les aliments vers la périphérie et on les bascule vers le centre.

Il est cependant tout à fait envisageable d'adopter une cinématique *« symétrique ».* L'invention concerne donc également un procédé de cuisson d'aliments dans lequel on dispose les aliments à cuire au sein d'un récipient 2, une pale 8 étant installée au sein du récipient 2, ledit procédé comprenant au moins une étape (i) dans laquelle on bascule au moins une fraction desdits aliments en direction de la périphérie du récipient 2 par mise en rotation relative de la pale 8 et du récipient 2.

### POSSIBILITE D'APPLICATION INDUSTRIELLE

L'invention trouve son application industrielle dans la conception, la fabrication et l'utilisation d'appareils de cuisine destinés à la préparation ou la cuisson d'aliments.

## Revendications

1. Appareil (1) de cuisson d'aliments comprenant un récipient (2) destiné à contenir les aliments, une pale (8) disposée au sein du récipient (2) afin de remuer les aliments dans le récipient (2) et un obstacle (20) positionné pour entrer en contact avec au moins une partie desdits aliments, ledit obstacle (20) étant monté au sein de l'appareil (1) pour que la pale (8) soit mobile relativement à l'obstacle (20), ledit appareil (1) comprenant en outre une poignée (6) conçue pour être solidarisée, à demeure ou de manière amovible, au récipient (2), ledit appareil étant **caractérisé en ce que** l'obstacle (20) fait partie intégrante de ladite poignée (6).

2. Appareil (1) selon la revendication 1 **caractérisé en ce que** le récipient (2) comprend un fond (2A) et une paroi latérale (2B) qui s'élève à partir dudit fond (2A), la poignée (6) comprenant une mâchoire (7) qui comporte elle-même deux mors (7A, 7B) destinés à enserrer ladite paroi latérale (2B) pour solidariser la poignée (6) au récipient (2).

3. Appareil (1) selon la revendication 2 **caractérisé en ce que** ledit obstacle (20) s'étend à partir du second mors (7B) de ladite poignée (6).

4. Appareil (1) selon l'une des revendications 2 et 3 **caractérisé en ce que** la poignée (6) comprend un organe de préhension (6A) et est conçue pour passer d'une configuration de manipulation à une configuration de rangement dans laquelle l'organe de préhension (6A) s'étend sensiblement le long de la paroi latérale (2B).

5. Appareil (1) selon la revendication 4 **caractérisé en ce que** lorsque la poignée (6) se trouve en configuration de manipulation, l'organe de préhension (6A) s'étend sensiblement perpendiculairement à la paroi latérale (28).

6. Appareil (1) selon l'une des revendications 2 à 5 **caractérisé en ce que** ledit obstacle (20) fait saillie, à partir de la paroi latérale (2B) en direction de l'intérieur du récipient (2), d'une épaisseur (E) sensiblement inférieure à 5 mm, et de préférence comprise entre sensiblement 2 et 3 mm.

7. Appareil (1) selon l'une des revendications 1 à 6 **caractérisé en ce que** le récipient (2) comprend un fond (2A) et une paroi latérale (2B) qui s'élève à partir dudit fond (2A), un jeu (J) étant ménagé entre la paroi latérale (2B) et la pale (8) pour éviter que la pale (8) ne bute contre l'obstacle (20).

8. Appareil (1) selon la revendication 7 **caractérisé en ce que** la pale (8) et l'obstacle (20) coupent un même plan parallèle au fond (2A).

9. Appareil (1) selon l'une des revendications 1 à 8 **caractérisé en ce que** l'obstacle (20) comprend un doigt rectiligne (20A).

10. Appareil (1) selon l'une des revendications 1 à 9 **caractérisé en ce qu'**il comprend un corps principal (3) au sein duquel le récipient (2) est monté immobile, la pale (8) étant montée mobile en rotation relativement au récipient (2) et au corps principal (3).

11. Appareil (1) selon l'une des revendications 1 à 10 **caractérisé en ce qu'**il comporte un moyen de chauffe principal conçu pour générer un flux d'air chaud orienté vers l'intérieur du récipient (2).

12. Appareil (1) selon l'une des revendications 1 à 11 **caractérisé en ce que** l'obstacle (20) présente des arêtes arrondies.

13. Appareil (1) selon l'une des revendications 1 à 12 **caractérisé en ce que** l'obstacle (20) est monté solidaire de la paroi latérale (2B), à l'intérieur du récipient (2).

14. Appareil (1) selon l'une des revendications 1 à 13 **caractérisé en ce que** le récipient (2) comprend un fond (2A) à partir duquel s'élève une paroi latérale (2B) entre un bord inférieur relié au fond (2A) et un bord supérieur libre (2C) délimitant une ouverture supérieure permettant l'introduction des aliments dans le récipient (2), l'obstacle (20) s'étendant à partir dudit bord supérieur libre (2C) en direction du fond (2A).

## Claims

1. An appliance (1) for cooking food, the appliance comprising a receptacle (2) for containing the food, a blade (8) placed within the receptacle (2) so as to stir the food in the receptacle (2), and an obstacle (20) positioned to come into contact with at least a fraction of the food, said obstacle (20) being mounted within the appliance (1) so that the blade (8) is movable relative to the obstacle (20), the appliance (1) being **characterized in that** it further includes a handle (6) designed to be secured to the receptacle (2), either permanently or releasably, said appliance being **characterized in that** the obstacle (20) forms an integral part of the handle (6).

2. An appliance (1) according to claim 1, **characterized in that** the receptacle (2) comprises a bottom (2A) from which there rises a side wall (2B), the handle (6) comprising a clamp (7) itself comprising two jaws (7A, 7B) for clamping onto the side wall (2B) of the receptacle (2) in order to connect the handle (6) to the receptacle (2).

3. An appliance (1) according to claim 2 **characterized in that** said obstacle (20) projects from the second jaw (7B) of said handle (6).

4. An appliance (1) according to claim 2 or claim 3, **characterized in that** the handle (6) includes a grip member (6A) and is designed to pass from a handling configuration to a storage configuration in which the grip member (6A) extends along the side wall (2B).

5. An appliance (1) according to claim 4 **characterized in that** when the handle (6) is in said handling configuration, the grip member (6A) extends substantially perpendicularly to the side wall (2B).

6. An appliance (1) according to any of claims 2 to 5, **characterized in that** said obstacle (20) projects over a thickness (E) from the side wall (2B) towards the inside of the receptacle (2), said thickness (E) being substantially less than 5 mm, and preferably lying in the range 2 mm to 3 mm

7. An appliance (1) according to any of claims 1 to 6, **characterized in that** the receptacle (2) comprises a bottom (2A) from which there rises a side wall (2B), a clearance (J) being provided between the side wall (2B) and the blade (8), so as to prevent the blade(8) from coming into abutment against the obstacle (20).

8. An appliance (1) according to claim 7 **characterized in that** the blade (8) and the obstacle (20) both intersect a same plane which is parallel to the bottom (2A).

9. An appliance (1) according to any of claims 1 to 8, **characterized in that** the obstacle (20) comprises a rectilinear finger (20A).

10. An appliance (1) according to any of claims 1 to 9, **characterized in that** it comprises a main body (3) within which the receptacle (2) is mounted stationary, the blade (8) being mounted to move in rotation relative to the receptacle (2) and to the main body (3).

11. An appliance (1) according to any of claims 1 to 10, **characterized in that** it includes main heater means (3) designed to generate a flow of hot air directed towards the inside of the receptacle (2).

12. An appliance (1) according to any of claims 1 to 11, **characterized in that** said obstacle (20) presents edges that are rounded.

13. An appliance (1) according to any of claims 1 to 12, **characterized in that** said obstacle (20) is mounted securely to the side wall (2B) inside the receptacle (2).

14. An appliance (1) according to any of claims 1 to 13, **characterized in that** the receptacle (2) comprises a bottom (2A) from which there rises a side wall (2B) between a bottom edge connected to the bottom (2A) and a free top edge (2C) defining a top opening enabling food to be inserted into the receptacle (2), said obstacle (2) projecting from the free top edge (2C) towards the bottom (2A).

## Patentansprüche

1. Gerät (1) zum Garen von Nahrungsmitteln, umfassend einen Behälter (2), der dazu bestimmt ist, die Nahrungsmittel zu enthalten, ein Rührblatt (8), das innerhalb des Behälters (2) angeordnet ist, um die Nahrungsmittel in dem Behälter (2) umzurühren, und ein Hindernis (20), das derart positioniert ist, dass es mit mindestens einem Teil der Nahrungsmittel in Kontakt kommt, wobei das Hindernis (20) innerhalb des Geräts (1) derart montiert ist, dass das Rührblatt (8) in Bezug zum Hindernis (20) beweglich ist, wobei das Gerät (1) ferner einen Griff (6) umfasst, der derart ausgeführt ist, dass er fest oder abnehmbar mit dem Behälter (2) verbunden ist, wobei das Gerät **dadurch gekennzeichnet ist, dass** das Hindernis (20) einen integralen Teil des Griffes (6) bildet.

2. Gerät (1) nach Anspruch 1, **dadurch gekennzeichnet, dass** der Behälter (2) einen Boden (2A) und eine Seitenwand (2B) umfasst, die vom Boden (2A) emporragt, wobei der Griff (6) eine Klemme (7) umfasst, die ihrerseits zwei Spannbacken (7A, 7B) umfasst, die dazu bestimmt sind, die Seitenwand (2B) festzuklemmen, um den Griff (6) mit dem Behälter (2) zu verbinden.

3. Gerät (1) nach Anspruch 2, **dadurch gekennzeichnet, dass** sich das Hindernis (20) von der zweiten Spannbacke (7B) des Griffes (6) aus erstreckt.

4. Gerät (1) nach einem der Ansprüche 2 und 3, **dadurch gekennzeichnet, dass** der Griff (6) ein Greifelement (6A) umfasst und derart ausgeführt ist, dass er von einer Handhabungskonfiguration in eine Aufbewahrungskonfiguration übergeführt werden kann, in der sich das Greifelement (6A) im Wesentlichen entlang der Seitenwand (2B) erstreckt.

5. Gerät (1) nach Anspruch 4, **dadurch gekennzeichnet, dass** sich das Greifelement (6A), wenn sich der Griff (6) in der Handhabungskonfiguration befindet, im Wesentlichen senkrecht zur Seitenwand (2B) erstreckt.

6. Gerät (1) nach einem der Ansprüche 2 bis 5, **dadurch gekennzeichnet, dass** das Hindernis (20) von der Seitenwand (2B) in Richtung des Inneren des Behälters (2) mit einer Stärke (E) von im Wesentlichen unter 5 mm und vorzugsweise zwischen im Wesentlichen 2 und 3 mm hervorragt.

7. Gerät (1) nach einem der Ansprüche 1 bis 6, **dadurch gekennzeichnet, dass** der Behälter (2) einen Boden (2A) und eine Seitenwand (2B) umfasst, die vom Boden (2A) emporragt, wobei ein Spiel (J) zwischen der Seitenwand (2B) und dem Rührblatt (8) vorgesehen ist, um zu vermeiden, dass das Rührblatt (8) gegen das Hindernis (20) schlägt.

8. Gerät (1) nach Anspruch 7, **dadurch gekennzeichnet, dass** das Rührblatt (8) und das Hindernis (20) eine selbe Ebene parallel zum Boden (2A) schneiden.

9. Gerät (1) nach einem der Ansprüche 1 bis 8, **dadurch gekennzeichnet, dass** das Hindernis (20) einen geraden Finger (20A) umfasst.

10. Gerät (1) nach einem der Ansprüche 1 bis 9, **dadurch gekennzeichnet, dass** es einen Hauptkörper (3) umfasst, in dem der Behälter (2) unbeweglich montiert ist, wobei das Rührblatt (8) drehbeweglich in Bezug zum Behälter (2) und zum Hauptkörper (3) montiert ist.

11. Gerät (1) nach einem der Ansprüche 1 bis 10, **dadurch gekennzeichnet, dass** es ein Haupterhitzungsmittel umfasst, um einen heißen Luftstrom zu erzeugen, der zum Inneren des Behälters (2) gerichtet ist.

12. Gerät (1) nach einem der Ansprüche 1 bis 11, **dadurch gekennzeichnet, dass** das Hindernis (20) abgerundete Kanten aufweist.

13. Gerät (1) nach einem der Ansprüche 1 bis 12, **dadurch gekennzeichnet, dass** das Hindernis (20) mit der Seitenwand (2B) fest verbunden im Inneren des Behälters (2) montiert ist.

14. Gerät (1) nach einem der Ansprüche 1 bis 13, **dadurch gekennzeichnet, dass** der Behälter (2) einen Boden (2A) umfasst, von dem eine Seitenwand (2B) zwischen einem mit dem Boden (2A) verbundenen unteren Rand und einem freien oberen Rand (2C) emporragt, welcher eine obere Öffnung begrenzt, die die Einführung der Nahrungsmittel in den Behälter (2) ermöglicht, wobei sich das Hindernis (20) vom freien oberen Rand (2C) in Richtung des Bodens (2A) erstreckt.
